# EUROPÄISCHE PATENTANMELDUNG

(11) **EP 2 138 640 A1**
(43) Veröffentlichungstag der Anmeldung: **30.12.2009**
(21) Anmeldenummer: 09164054.0
(22) Anmeldetag: 29.06.2009
(51) Int. Cl.: E03D 9/08, G01N 21/88

(54) **Vorrichtung und Verfahren zur Reinigung des Intimbereichs**

(30) Priorität: 27.06.2008 DE 102008030533
(71) Anmelder: Kennerknecht, Stephan, 82395 Obersöchering (DE)
(72) Erfinder: Kennerknecht, Stephan, 82395 Obersöchering (DE)
(74) Vertreter: Ganahl, Bernhard

(57) **Zusammenfassung**

Die Erfindung betrifft eine Vorrichtung (1) und ein Verfahren zur Reinigung des Intimbereichs eines auf einer Toiletten-Schüssel (2) sitzenden Benutzers umfassend eine Reinigungsvorrichtung zum Reinigen des Intimbereichs. Diese Vorrichtung zeichnet sich dadurch aus dass sie eine Sensoreinrichtung (20) zur Detektion des Ortes bzw. des Verschmutzungszustandes und eine Steuereinrichtung zum Ansteuern der Reinigungseinrichtung nach Maßgabe des detektierten Ortes bzw. des detektierten Verschmutzungszustandes aufweist.

## Beschreibung

Die vorliegende Erfindung betrifft eine Vorrichtung und ein Verfahren zur Reinigung des Intimbereichs eines auf einer Toiletten-Schüssel sitzenden Benutzers.

Aus der DE 10 2004 048 724 A1 geht ein Intimreiniger hervor. Der Intimreiniger ist eine elektronisch gesteuerte, mechanische Vorrichtung, die an jeder herkömmlichen Toilette angebracht werden kann. Die direkte Reinigung erfolgt durch einen kleinen Bürstenkopf mit Borsten unter der Zuhilfenahme von Warmwasser und Flüssigseife. Durch langsame Kreisbewegungen der Bürste werden Schmutz und Bakterien entfernt. Danach wird der Intimbereich mit Warmluft getrocknet. Der Bürstenkopf ist austauschbar. Der Intimreiniger kann über eine Fernbedienung angesteuert werden.

In der DE 20 2007 002 998 U1 ist eine Wassersprühvorrichtung für eine Toilettensitzeinheit beschrieben. Die Wassersprühvorrichtung weist eine Basis auf, die einen ersten Raum umfasst und einen zweiten Raum der in Verbindung mit dem ersten Raum steht. Es ist eine Kaltwasseröffnung, eine Heißwasseröffnung, ein erster Auslass und einen zweiter Auslass vorgesehen, wobei die Kaltwasseröffnung und die Heißwasseröffnung in Verbindung mit dem ersten Raum stehen und der erste Auslass und der zweite Auslass in Verbindung mit dem zweiten Raum stehen. Über ein erstes Steuerventil kann der Durchfluss zwischen der Kaltwasseröffnung und der Heißwasseröffnung gesteuert werden. Über ein im zweiten Raum befestigtes Steuerungsventil können der erste Auslass und der zweite Auslass geöffnet und geschlossen werden. Des Weiteren sind zwei Wassersprüheinheiten vorgesehen, die mit dem ersten Auslass bzw. dem zweiten Auslass verbunden sind, wobei jede dieser Wassersprüheinheiten eine Leitung und ein Sprührohr aufweist. Diese erstrecken sich zur Toilettensitzeinheit um Wasser zu versprühen, um den Anus des Benutzers zu reinigen.

Aus der DE 203 20 072 U1 geht ein beweglicher Toilettentrainingnachttopf mit Gesäßspülvorrichtung für Kinder hervor. Der Nachttopf weist ein Nachttopfkörper mit integrierter Sitzfläche und einer Sitzöffnung in der Mitte der Sitzfläche auf. Des Weiteren ist ein Sammelgefäß unterhalb der Sitzöffnung vorgesehen. Der Nachttopf weist eine Energiequelle und einen Steuerschalter auf. Der Steuerschalter ist an der Oberfläche des Nachttopfköpers angebracht. Am hinteren Ende des Nachttopfkörpers ist eine Spritzdüse ausgebildet und im Inneren des Nachttopfkörpers ist ein Wasserbehälter vorgesehen, dessen Einfüllstutzen mit einem Verschlussstopfen versehen ist und dessen Wasserauslass zu einer Pumpe führt. Der Auslass der Pumpe ist mit einer Spritzdüse verbunden, sodass ein Kind nach dem Stuhlgang nur den Steuerschalter betätigen muss, damit sein After durch den Wasserstrahl gereinigt wird.

In der DE 20 2004 010 314 U1 ist ein Toilettensitz mit einer Sprüheinrichtung beschrieben. Auf der Innenseite des Toilettensitzes ist eine schwenk- und regelbare Sprüheinrichtung derart angeordnet, dass sie in einer Ruhestellung eingeklappt an der Innenseite des Toilettensitzes anliegend gehalten ist und in der Arbeitsstellung nach unten in ein Toilettenbecken ausschwenkbar ist. Die Sprüheinrichtung ist über eine Wasserzuführungseinheit mit einer Wasserversorgung verbunden.

Aus der DE 202 15 173 U1 geht eine physiologische Waschvorrichtung hervor. Die Waschvorrichtung weist einen Hauptkörper auf, der ein transparenter hohler Tank ist und mittels einer Trennplatte in einen oberen und einen unteren Raum unterteilt ist. Die Oberseite bildet eine Aufnahmekammer und an einer oberen Öffnung der Aufnahmekammer ist ein trichterförmiger Wassereinlass vorgesehen. Der Wassereinlass ist mit einem Filterschwamm versehen und auf der Trennplatte ist ein Heizelement angeordnet. Weiterhin weist die Waschvorrichtung eine Pumpe auf, die an der Unterseite der Trennplatte angeordnet ist und über eine Wassereinlasseinleitung mit der Aufnahmekammer und über eine Wasserübertragungsleitung mit einem Wassersprühstab verbunden ist. Der Wassersprühstab ist in einem Wasserschlauchaufnahmemechanismus an einer Querseite am oberen Ende des Hauptkörpers eingehakt. Der Wasserschlauchaufnahmemechanismus ermöglicht ein freies Aufwickeln oder Abwickeln eines Wasserschlauches des Wassersprühstabs, wobei der Wassersprühstab mit einem Betätigungsschalter versehen ist.

In der JP 2007 332 750 A ist eine Duschtoilette mit einem Duscharm beschrieben, wobei an dem Duscharm eine Kamera befestigt ist. Die Kamera liefert Bilder des Bereichs, den der Duscharm mit Wasser besprüht. Diese Bilder werden an einen Bildschirm übertragen. Anhand der Bilder kann der Benutzer die Position des Duschstrahls mittels eines Kontrollelements verändern. Mit diese Vorrichtung kann außerdem gesteuert werden, ob der zu reinigende Bereich vollständig gereinigt wurde.

Aus der JP 2006 183 417 A geht eine Toilette zur Detektion von insbesondere Krankheiten im Analbereich, wie zum Beispiel von Hämorriden oder Krebs, hervor. Bei dieser Vorrichtung ist eine Miniaturkamera im hinteren Bereich der Toilettenschüssel angeordnet, die unter zu Hilfenahme von Licht eine Aufnahme des Anus macht und das Bild auf einem LCD-Bildschirm, der an einem Kontrollpanel angeordnet ist, anzeigt. Diese Kamera weist einen Zoommechanismus auf, um die Details genau zu erkennen. Mittels des Kontrollpanels lassen sich eine oder mehre entsprechende Düsen steuern. Auf diese Weise soll es einem Benutzer möglich sein, seinen eignen Gesundheitszustand zu überprüfen.

In der WO 2005/087 067 A1 ist ein automatisches Reinigungssystem für behinderte Menschen beschrieben. Diese Vorrichtung weist eine bewegliche Plattform, um den Benutzer entsprechend auf einer Toilette zu positionieren, einen automatischen Papierbereitstellmechanismus sowie eine künstliche Hand auf, die den Wischprozess nach dem Stuhlgang ausführt.

Aus der EP 1 378 612 A1 geht eine Toilettenanlage hervor. Diese Toilettenanlage weist eine WC-Schüssel und eine Spülvorrichtung sowie eine Vorrichtung zur Spülerkennung und Spülauslösung auf. Es sind optische Mittel vorgesehen, die zur ständigen Überwachung des Verschmutzungszustandes der WC-Schüssel dienen. Der Verschmutzungsgrad wird mittels einer Bildanalyse ermittelt und mit einem optimalen Reinheitsgrad verglichen. Bei einer Abweichung zum optimalen Reinheitsgrad wird die Spülvorrichtung entsprechend automatisch angesteuert. Die Bilddaten werden vorzugsweise mit einer Kamera erfasst.

Nachteilig bei den aus dem Stand der Technik bekannten Vorrichtungen ist, dass der Benutzer beim Reinigungsvorgang eingreifen und den Reinigungsvorgang steuern muss. Dies ist manchen Menschen wie z.B. Behinderten oder älteren Menschen nicht möglich.

Aufgabe der Erfindung ist es eine Vorrichtung und ein Verfahren zur Reinigung des Intimbereichs zu schaffen, mit der der Intimbereich gereinigt wird, ohne dass der Benutzer eingreifen muss.

Die Aufgabe wird mit einer Vorrichtung mit den Merkmalen des Anspruchs 1 und mit einem Verfahren mit den Merkmalen des Anspruchs 10 gelöst.

Erfindungsgemäß ist eine Vorrichtung und ein Verfahren zur Reinigung des Intimbereichs für eine Toilettenschüssel vorgesehen. Die Vorrichtung umfasst eine Reinigungseinrichtung zum Reinigen des Intimbereichs und eine Sensoreinrichtung zur Detektion des Verschmutzungszustandes des Intimbereichs, sowie eine Steuereinrichtung zum Ansteuern der Reinigungseinrichtung nach Maßgabe des detektierten Ortes und/oder des detektierten Verschmutzungszustandes, wobei die Steuereineinrichtung derart ausgebildet ist, dass die Detektion und die Reinigung vollautomatisch ausgeführt werden.

Mit der erfindungsgemäßen Vorrichtung können ältere und/oder behinderte Menschen ihren Intimbereich reinigen, ohne dass sie eingreifen und den Reinigungsvorgang steuern müssen. Die Reinigung wird vollautomatisch ausgeführt.

Älteren und/oder behinderten Menschen ist es verständlicherweise häufig unangenehm, wenn sie nach dem Stuhlgang von einer weiteren Person im Intimbereich beim Reinigungsvorgang berührt werden. Mit der erfindungsgemäßen Vorrichtung wird der Reinigungsvorgang ausgeführt, ohne dass eine weitere Person erforderlich ist bzw. den Betreffenden berühren muss.

Eine weitere erfindungsgemäßen Vorrichtung zur Reinigung des Intimbereichs für eine Toilettenschüssel umfasst eine Reinigungseinrichtung zum Reinigen des Intimbereichs, eine Sensoreinrichtung zur Detektion des Verschmutzungszustandes des Intimbereichs, die als Kamera zum Detektieren von Licht im sichtbaren Wellenlängebereich ausgebildet ist und im Infrarotbereich auch eine bestimmte Empfindlichkeit aufweist, und eine Beleuchtungseinrichtung, die eine Infrarot-Lichtquelle ist.

Hierdurch lassen sich Verschmutzungen im Intimbereich mit kostengünstigen Mitteln besonders einfach und präzise detektieren.

Zudem kann das erfindungsgemäße Verfahren durch die Detektion des Verschmutzungszustandes nach einem ersten Reinigungsvorgang sicherstellen, dass der zu reinigende Bereich vollständig sauber ist. Ist dies nach dem ersten Reinigungsvorgang nicht der Fall, wird der Reinigungsvorgang gegebenenfalls wiederholt, bis der zu reinigende Bereich vollständig sauber ist. Auf diese Weise kann die betreffende Person selbst oder eine weitere Person sicherstellen, dass der Intimbereich vollständig sauber ist.

Die Reinigungseinrichtung umfasst eine aus Düsen bestehende Duscheinrichtung, die auf einem verfahrbaren Arm angeordnet ist, eine Wasserpumpe sowie eine Heizeinrichtung für die Duscheinrichtung und eine Steuereinrichtung.

Die Sensoreinrichtung umfasst auf einem verfahrbaren Arm angeordnete Sensoren und eine Steuereinrichtung.

Vorzugsweise ist der Arm um seine Längsachse drehbar ausgebildet.

Die Reinigungseinrichtung und die Sensoreinrichtung sind vorzugsweise auf dem selben Arm angeordnet.

Der Arm kann auch als im Raum frei beweglicher Roboterarm ausgebildet sein. Durch den Roboterarm kann die Sensoreinrichtung Bilder aus beliebigen Winkeln aufnehmen. Dadurch wird eine genauere Detektion möglich. Zudem kann der Winkel der Reinigungseinrichtung gegenüber dem zu reinigenden Bereich beliebig verändert werden, um eine effektivere Reinigung zu ermöglichen.

Die Sensoreinrichtung umfasst vorzugsweise einen optischen Sensor, wie z.B. eine Kamera und eine Auswerteeinrichtung zum Durchführen einer Bildanalyse eines erfassten Bildes zur Ermittlung von Steuerparametern zum Ansteuern der Reinigungseinrichtung. Die Bildanalyse umfasst beispielsweise das Segmentieren und Ermitteln der Orte der Segmente.

Die erfindungsgemäße Vorrichtung kann als Aufsatz für nahezu alle gängigen Toiletten ausgebildet sein. Ein derartiger Aufsatz kann auf jede Toilette nachgerüstet werden und findet daher eine breite Anwendung.

Die Erfindung wird beispielhaft anhand der Zeichnungen näher erläutert. Es zeigen dabei schematisch:
Fig. 1 ein erstes Ausführungsbeispiel der erfindungsgemäßen Vorrichtung, die in eine Toilettenschüssel integriert ist, in einer perspektivischen Ansicht von oben,
Fig. 2 die erfindungsgemäße Vorrichtung aus Figur 1 in einer seitlich geschnittenen Ansicht,
Fig. 3 ein zweites Ausführungsbeispiel der erfindungsgemäßen Vorrichtung, die in eine Toilettenschüssel integriert ist, in einer perspektivischen Ansicht von oben,
Fig. 4 ein drittes Ausführungsbeispiel der erfindungsgemäßen Vorrichtung, die in eine Toilettenschüssel integriert ist, in einer perspektivischen Ansicht von oben,
Fig. 5 ein viertes Ausführungsbeispiel der erfindungsgemäßen Vorrichtung, die in eine Toilettenschüssel integriert ist, in einer perspektivischen Ansicht von oben,
Fig. 6 ein fünftes Ausführungsbeispiel der erfindungsgemäßen Vorrichtung, die in eine Toilettenschüssel integriert ist, in einer perspektivischen Ansicht von oben,
Fig. 7 ein sechstes Ausführungsbeispiel der erfindungsgemäßen Vorrichtung, die in eine Toilettenschüssel integriert ist, in einer perspektivischen Ansicht von oben,
Fig. 8 ein Ablaufdiagramm des erfindungsgemäßen Verfahrens,
Fig. 9 ein siebtes Ausführungsbeispiel der erfindungsgemäßen Vorrichtung, die in eine Toilettenschüssel integriert ist, in einer perspektivischen Ansicht von oben,
Fig. 10 ein Ablaufdiagramm des erfindungsgemäßen Verfahrens,
Fig. 11 ein Ausführingsbeidpiel der erfindungsgemäßen Vorrichtung mit Benutzer in einer seitlich geschnittenen Ansicht, und
Fig. 12 eine abzubildende Fläche in einer Draufsicht von unten.

Die erfindungsgemäße Vorrichtung 1 zum Reinigen eines Intimbereichs weist eine Toiletten-schüssel 2 und einen darin angeordneten Duscharm 3 auf. Die Toilettenschüssel 2 ist z.B. eine Hängeschüssel und besitzt eine an sich übliche Form. Die Toilettenschüssel 2 weist ein Toilettenbecken 4 auf. Das Toilettenbecken besitzt oben einen Toilettenbeckenrand 5, der eine ovale Öffnung 6 begrenzt. Am Toilettenbeckenrand 5 ist ein umlaufender, nach innen vorstehender Spülkragen 7 ausgebildet. Am Boden 8 des Toilettenbeckens ist ein mit Wasser gefülltes Syphon (nicht dargestellt) angeordnet. Die Toilettenschüssel 2 ist derart ausgebildet, dass sie mit ihrer rückwärtigen Seite 9 an einer Wand befestigbar ist. Auf der Toilettenschüssel 2 ist eine Toilettenbrille (nicht dargestellt) angeordnet.

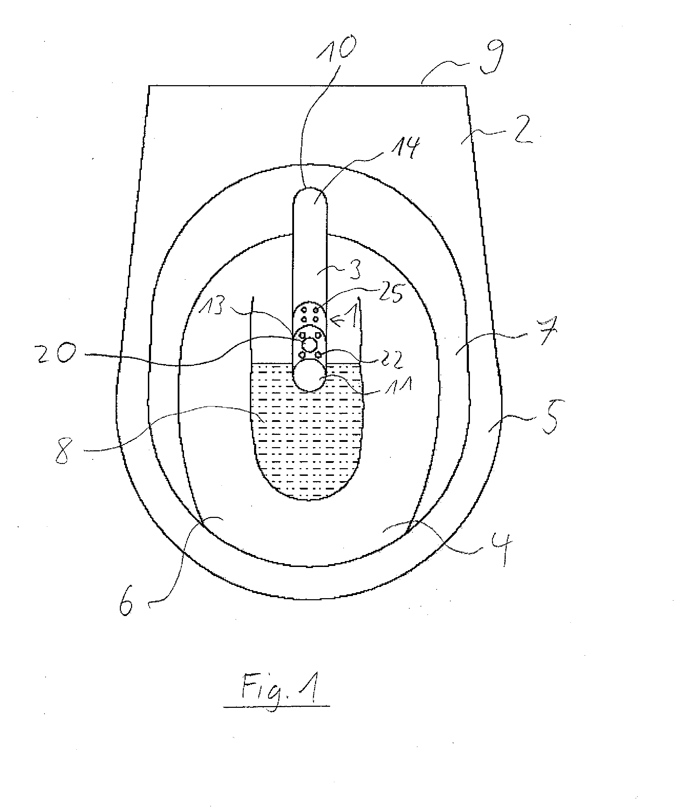

In einem ersten Ausführungsbeispiel ist die Vorrichtung 1 zur Reinigung des Intimbereichs in den Duscharm 3 integriert (Figur 1). Dieser Duscharm 3 ist eine Weiterbildung eines herkömmlichen Duscharms, wie er z.B. aus der Balena Dusch-WC Serie von Geberit bekannt ist.

Der Duscharm 3 ist ein langgestreckter linearer rohrförmiger Körper.

In der rückwärtigen Seite des Spülkragens 7 ist eine Öffnung 10 ausgebildet. Der Duscharm 3 ist aus dieser Öffnung 10 des Toilettenbeckenrandes 5 etwa horizontal in Richtung der Mitte der ovalen Öffnung des Toilettenbeckens 4 ausfahrbar und einfahrbar.

Das in das Toilettenbecken 4 stehende freie Ende 11 des Duscharms wird als vorderes Ende 11 des Duscharms und das andere Ende 12 wird entsprechend als hinteres Ende 12 bezeichnet. Das vordere Ende 11 des Duscharms ist mit einer Abschlusskappe 13 versehen. Die Abschlusskappe weist oberseitig eine ebene horizontale Fläche 18 auf. Der restliche Teil 11 des Duscharms wird als Duscharmkörper 14 bezeichnet.

Die Stirnseite 15 der Abschlusskappe 13 schließt im eingefahrenen Zustand bündig mit dem Toilettenbeckenrand 7 der Toilettenschüssel 2 ab. Die Abschlusskappe 13 ist vorzugsweise aus Kunststoff ausgebildet.

Der Duscharmkörper 14 ist z.B. aus Edelstahl ausgebildet. Der Duscharm 3 weist einen Durchmesser von in etwa 2,5 cm bis 5 cm auf, wobei die Abschlusskappe 13 einen in etwa 0,1 cm bis 0,2 cm geringeren Durchmesser als der Duscharmkörper 14 aufweist.

In der Öffnung 10 des Toilettenbeckenrandes 7 ist eine Hülse 15 angeordnet, um ein gleichmäßiges Spaltmaß zwischen der Mantelfläche 16 des Duscharms 3 und der Öffnung 10 bereitzustellen. Im vorderen Bereich der Hülse 15 ist oberseitig eine erste Dichtlippe 17 vorgesehen. Die erste Dichtlippe 17 erstreckt sich bis zu einer Oberseite 18 der Abschlusskappe 13. Die erste Dichtlippe 17 säubert insbesondere die Oberseite 18 der Abschlusskappe 13. Im hinteren Bereich der Öffnung 10 ist zwischen der Hülse 15 und dem Duscharmkörper 3 eine umlaufende zweite Dichtlippe 19 angeordnet. Die zweite Dichtlippe 19 säubert den Duscharm 3 vollflächig beim Ein- und beim Ausfahren von Verunreinigungen und gewährleistet so die Hygiene der Vorrichtung 1.

Der Duscharm 3 ist mit einem Stellmotor (nicht dargestellt) verbunden. Der Stellmotor ermöglicht das Ein- und Ausfahren des Duscharms 3 und eine Drehbewegung um die Längsachse des Duscharms 3.

Die Mantelfläche 16 des Duscharms 3 ist mit einer Beschichtung versehen. Die Beschichtung ist derart ausgebildet, dass die Mantelfläche 16 des Duscharms 3 eine geringe Benetzbarkeit aufweist, das bedeutet, dass Flüssigkeiten und Feststoffe nicht an der Oberfläche anhaften und daher einfach weggespült werden können. Derartige Eigenschaften werden als Lotuseffekt bezeichnet. Auf diese Weise wird die Reinigung des Duscharms 3 durch die Dichtlippen 17, 19 beim Ein- und Ausfahren erheblich erleichtert.

Die Vorrichtung 1 weist eine Sensoreinrichtung 20 zur Detektion des zu reinigenden Bereichs bzw. des Intimbereichs auf. Die Sensoreinrichtung 20 weist Sensorelemente 20 auf, die oberseitig, in die Abschlusskappe 13 des Duscharms 3 integriert sind. Ein Abtastbereich der Sensoreinrichtung 20 erstreckt sich ausgehend vom vorderen Ende 11 des Duscharms 3 kegelförmig in einem Winkel von in etwa 30° bis 90° nach oben. Die Sensorelemente 20 sind ein optischer Sensor, vorzugsweise in 1-dimensionalen oder 2-dimensionalen Kamerachips mit einem Complementary Metal Oxide Semiconductor Sensoren (CMOS-Sensor, monochrome Flächenkamera). Die Sensoreinrichtung 20 weist eine optische Achse auf, die vorzugsweise etwa vertikal ausgerichtet ist. Als Kamera kann z.B. eine AVT Guppy F-025 der ALLIED VISI-ON TECHNOLOGIES GMBH, Deutschland, vorgesehen sein. Diese Kamera 20 ist zum Detektieren von Licht im sichtbaren Wellenlängenbereich von 380 nm bis 780 nm ausgebildet. Sie kann jedoch auch Licht außerhalb des sichtbaren Bereiches (im infraroten Bereich bis zu 900 nm bzw. 1000 nm) mit einer geringeren Empfindlichkeit detektieren. Das Sensorelement 20 ist über eine im Duscharm 3 angeordnete Signalleitung 21 mit einer Steuereinrichtung (nicht dargestellt) verbunden.

Es ist eine Beleuchtungseinrichtung 22 vorgesehen, um den zu detektierenden Bereich auszuleuchten und auf diese Weise die Detektion zu erleichtern. Die Beleuchtungseinrichtung 22 ist als Anordnung von z.B. vier Leuchtdioden (LED's) ausgebildet und ebenfalls in die Abschlusskappe 13 integriert. Die LED's sind in etwa gleichmäßig voneinander beabstandet um die Sensoreinrichtung 20 herum angeordnet. Die Anordnung der LED's erfolgt derart, dass sie den Abtastbereich der Sensoreinrichtung 20 gleichmäßig ausleuchten. Die Beleuchtungseinrichtung 22 ist über eine Leitung 23 mit der Steuereinrichtung verbunden.

Als Beleuchtungseinrichtung 22 sind Infrarot-LED's vorgesehen. Die Infrarot LED's strahlen Licht mit einer Wellenlänge von in etwa 750 nm bis 1300 nm, insbesondere 850 nm bis 1000 nm und vorzugsweise 850 nm bis 940 nm ab.

Es hat sich überraschend gezeigt, dass die mit Infrarotlicht bestrahlten Exkremente in einem mittels einer Kamera für sichtbares Licht erzeugtem Bild als helle Bereiche präzise dargestellt werden. Der Kontrast ist sehr stark ausgeprägt, so dass diese Orte genau und zuverlässig erfasst werden. Eine Vorrichtung zur Reinigung des Intimbereich mit einer Kombination aus einer Infrarot-Lichtquelle und einer Kamera für das sichtbare Licht stellt einen eigenständigen Erfindungsgedanken dar. Eine solche Vorrichtung kann nicht nur zum automatischen Reinigen des Intimbereichs sondern auch zum manuellen Reinigen des Intimbereichs mittels einer entsprechen Eingabeeinrichtung (Joystick, berührungsempfindlicher Bildschirm, Tastatur) zum manuellen Festlegen der zu reinigenden Bereiche verwendet werden. Zusätzlich ist ein Bildschirm vorgesehen, an dem das erfasste Bild mit den verschmutzten Bereichen dargestellt wird.

Zum Schutz vor Verschmutzung und um eine einfache und hygienische Reinigung beim Einfahren des Duscharms 3 zu gewährleisten ist über der Sensoreinrichtung und der Beleuchtungseinrichtung eine Abdeckung 24, z.B. eine transparente Kunststoff- oder Glasscheibe, derart angeordnet, dass sie bündig mit der Mantel- bzw. Aussenwandung der Abschlusskappe 13 des Duscharms abschließt. Die Kunststoff- oder Glasscheibe 24 ist derart ausgebildet, dass sie die optischen Eigenschaften der Sensorelemente 20 und der Beleuchtungseinrichtung 22 nicht beeinflusst.

Die Abdeckung 24 kann auch optische Eigenschaften einer Linse aufweisen, um das Licht der Beleuchtungseinrichtung 22 zu lenken oder um den Detektionsbereich der Sensorelemente 20 zu verändern.

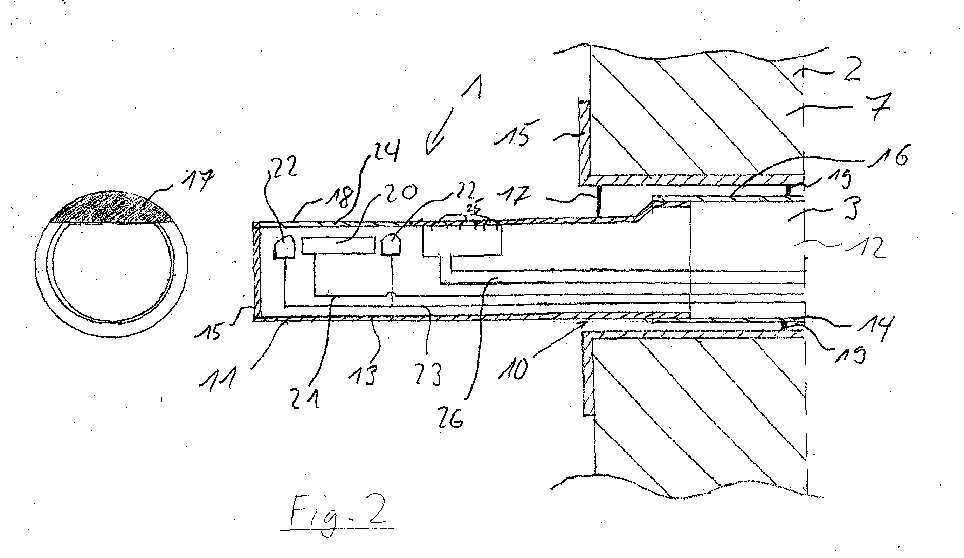

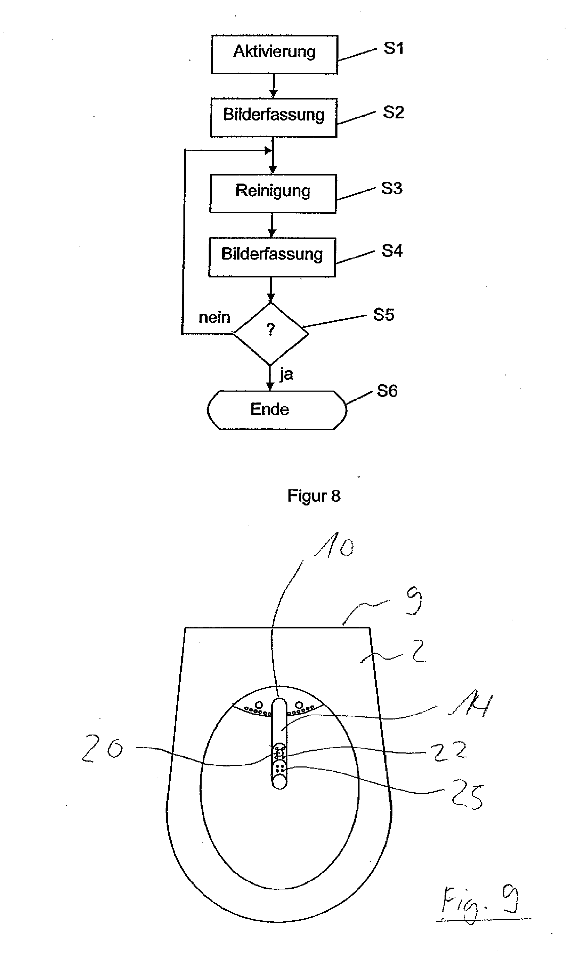

Ferner ist in der Abschlusskappe 13 des Duscharms 3, oberseitig im Bereich vor der Sensoreinrichtung 20 und der Beleuchtungseinrichtung 22 eine aus Wasserdüsen 25 zur Reinigung des Intimbereichs ausgebildete Duscheinrichtung vorgesehen (Fig. 9). Die Duscheinrichtung kann auch hinter der Sensoreinrichtung angeordnet sein, wie es in den Fig. 1 und 2 dargestellt ist. Die Wasserdüsen 25 sind über eine im Duscharm 3 angeordnete Wasserleitung 26 mit einer Wasserpumpe und vorzugsweise einer Heizeinrichtung (beide nicht dargestellt) verbunden. Diese Anordnung wird als Reinigungseinrichtung bezeichnet.

Seitlich neben dem Duscharm 3 kann ein ausfahrbarer Föhnarm angeordnet sein. Der Föhnarm ist ein langgestreckter rohrförmiger Körper, der vorzugsweise aus Edelstahl ausgebildet ist. Der Föhnarm ist mit einem Heißluftgebläse derart verbunden, dass aus einer am "vorderen" Ende des Föhnarms angeordneten Düse Heißluft in Richtung des Intimbereichs abgegeben werden kann.

Die Steuereinrichtung ist in der Toilettenschüssel 2, einem Spülkasten oder separat, außen an der Toilettenschüssel 2 angeordnet. Die Steuereinrichtung ist z.B. eine kompakte PC-Einheit. Die Steuereinrichtung steuert einzelne Abtastschritte der Detektion. Die Steuereinrichtung ist wie bereits beschrieben über Leitungen 21, 23 mit den Sensorelementen 20 und der Beleuchtungseinrichtung 22 verbunden. Über diese Leitungen kann die Steuereinrichtung die Beleuchtungseinrichtung 22 und die Sensoreinrichtung 20 ansteuern. Die Steuereinrichtung ist derart ausgebildet, dass sie den Detektionsvorgang über die Sensoreinrichtung und den Reinigungsvorgang über die Reinigungseinrichtung bzw. die notwendige Einstellung des Duscharms 3 eigenständig vollautomatisch ausführen kann.

Die Steuereinrichtung weist eine Auswerteeinrichtung zum Ermitteln der Position des Intimbereichs bzw. des zu reinigenden Bereichs und zum Ermitteln des Verschmutzungszustandes dieses Bereichs auf.

Die Steuereinrichtung steuert zudem den Druck und die Temperatur des von der Wasserpumpe und der Heizeinrichtung für die Duscheinrichtung bereitgestellten Wassers.

Die Steuereinrichtung steuert den Stellmotor des Duscharms und positioniert diesen nach Maßgabe des Detektionsergebnisses, d.h. entsprechend der Position des Intimbereichs und/oder der Verschmutzung. Der Wasserdruck der Wasserpumpe kann auch dem Verschmutzungszustand angepasst werden.

Die Steuereinrichtung kann als Embedded PC-Einheit ausgebildet sein.

Die Steuereinrichtung wird von einer automatischen Steuereinheit angesteuert.

Um die Vorrichtung 1 zu aktivieren kann als automatische Steuereinheit ein akustischer Sensor oder ein Drucksensor unterhalb der Toilettenbrille vorgesehen sein. Mittels dieses Sensors kann der Detektions bzw. der Reinigungsvorgang aktiviert bzw. initiiert werden.

Im folgenden wird das erfindungsgemäße Verfahren anhand des ersten Ausführungsbeispiels beschrieben.

Nach Beendigung des Stuhlgangs wird vom Benutzer ein Signal an die Steuereinrichtung gegeben, dass der Stuhlgang beendet ist.

Die Steuereinrichtung steuert den Duscharm derart an, dass dieser an eine vorbestimmte Stelle ausfährt, bei der üblicherweise die Sensoreinrichtung 20 in etwa vertikal unter dem Bereich angeordnet ist, in dem der zu detektierende Bereich bzw. der Bereich der Verschmutzung angeordnet ist. Da der Benutzer 27 mit seinem Intimbereich etwa horizontal auf der Toiletten-schüssel 2 sitzt kann der Intimbereich näherungsweise als horizontale Fläche betrachtet werden, die mit der Kamera abzubilden ist. Da die optische Achse 28 der Kamera vertikal ausgerichtet ist, steht sie somit etwa senkrecht auf diese abzubildende Fläche.

Die Steuereinrichtung aktiviert die im Duscharm angeordnete Beleuchtungseinrichtung (Infrarot-LED) zum Beleuchten des Intimbereichs.

Die Steuereinrichtung aktiviert die Sensoreinrichtung 20 zum Erzeugen eines Graustufenbildes des Intimbereichs. Danach wird die Beleuchtungseinrichtung 22 wieder ausgeschaltet.

Das Bild weist eine Vielzahl von Bildpunkten auf, denen jeweils ein Grauwert zugeordnet ist.

Die zu detektierende Verschmutzungen bzw. die Exkremente weisen aufgrund ihrer Beschaffenheit, d.h. der Feuchte, der Konsistenz und der Temperatur, im Vergleich zum menschlichen Körper bzw. der Haut andere Reflektionseigenschaften auf. Die Exkremente reflektieren das von der Beleuchtungseinrichtung ausgesendete Licht sehr gut. Sie werden als Bildpunkte mit einem sehr hellen Grauwert dargestellt. Die menschliche Haut reflektiert dagegen schlechter. Sie wird mit einem dunkleren Grauwert dargestellt. Der trockene menschliche After erzeugt sehr dunkle Bildpunkte.

Zur Bestimmung der verschmutzten Bereiche wird deshalb ein Schwellwert für eine Graustufe verwendet, der heller als die Haut ist. Dieser Schwellwert ist ein empirischer Wert, der jeweils für den verwendeten Beleuchtungstyp und den Kameratyp zu ermitteln ist.

Das Bild wird mittels des Schwellwertes segmentiert, indem alle Graustufenwerte, die dunkler als der Schwellwert sind auf 0 und die Grauwerte, die größer oder gleich dem Schwellwert sind, auf 1 gesetzt werden. Das Bild wird somit binarisiert. Die Bildpunkte mit dem Wert 1 bilden ein oder mehrere Segmente. Diese Segmente entsprechen dem verschmutzten Bereich.

Mit Hilfe eines an sich bekannten Algorithmus lässt sich der Flächenschwerpunkt 30 und/oder die Größe des verschmutzten Bereichs im erfassten Bild (Koordinaten x,y; Figur 13) bestimmen.

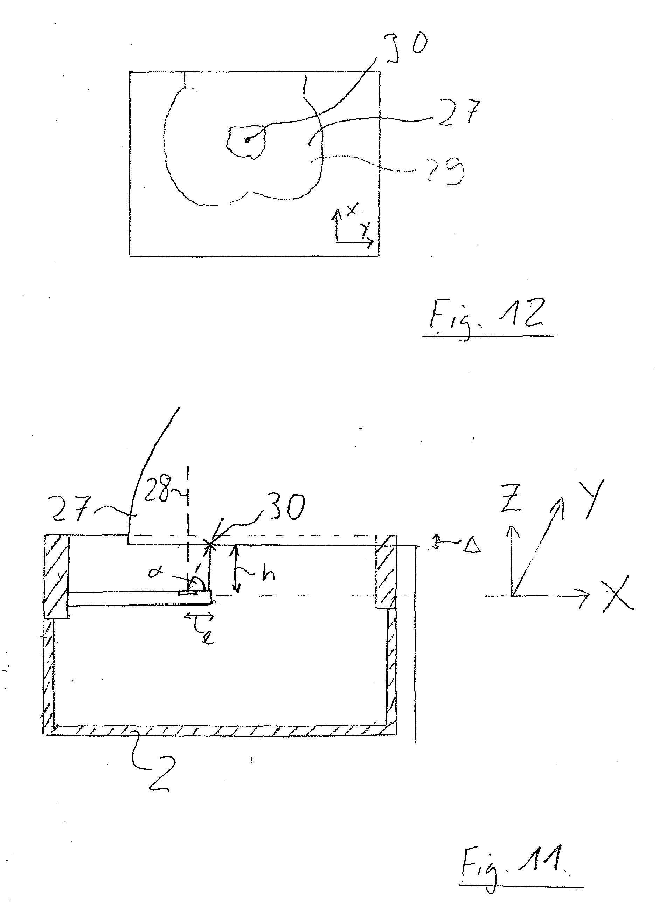

Die Höhe h des Benutzers 27 bzw. des zu detektierenden Bereichs bzgl. des Niveaus der Kamera ist bekannt. Diese Höhe unterliegt einer Toleranz von einigen cm (etwa ein Δ=3 cm), bedingt durch die Art und Weise wie der Benutzer auf der Toilette sitzt (Figur 11). Da die optische Achse 28 etwa senkrecht auf der abzubildenden Fläche 29 steht, kann sehr einfach mittels des Abbildungsmaßstabs der Kamera, mit welchem sie die abzubildende Fläche 29 abbildet, dem Ort der Kamera während der Aufnahme und der Höhe h (Abstand zwischen der Kamera und der abzubildenden Fläche) die Koordinaten (x, y) der Bildpunkte des erzeugten Bildes in die Koordinaten der realen Welt (Weltkoordinaten X, Y, Z in Figur 11) umgesetzt werden. In entsprechender Weise können auch die Flächenschwerpunkte 30 (Figur 12) des verschmutzten Bereichs im Bild in die Weltkoordinaten umgesetzt werden.

Aus den Weltkoordinaten der Flächenschwerpunkte werden Steuerparameter zum Ansteuern des Duscharmes abgeleitet. Diese Steuerparameter umfassen jeweils den Ort X', den die Wasserdüsen 25 in Längsrichtung des Duscharmes einnehmen muss, und die Winkelstellung α des Drehwinkels um die Längsachse des Duscharmes 3, so dass die Wasserdüsen auf den jeweiligen Flächenschwerpunkt gerichtet sind.

Anhand dieser Steuerparameter (X', α) steuert die Steuereinrichtung den Duscharm an. Der Duscharm verfährt dann in Längsrichtung des Duscharms exakt unter den Flächenschwerpunkt des detektierten Bereichs und gibt Wasser aus, um den Bereich zu Reinigen.

Bei großflächigen Verschmutzungen wird der Duscharm hin und her verfahren und geschwenkt, um die Verschmutzung möglichst vollständig zu entfernen.

Beim obigen Verfahren wird zum Segmentieren ein empirischer Schwellwert der Graustufenwerte verwendet, der etwas heller als die nicht verschmutzte Haut ist.

Nach Beendigung des Reinigungsvorgangs kann der Verschmutzungszustand des zu reinigenden Bereichs anhand eines neuen Bildes überprüft werden und gegebenenfalls ein weiterer Reinigungsvorgang initiiert werden.

In einem weiteren Ausführungsbeispiel des erfindungsgemäßen Verfahren wird der Schwellwert adaptiert, d.h. zunächst wird der tatsächliche Grauwert der unverschmutzten Haut des Benutzers ermittelt.

Nach der Erzeugung des Graustufenbildes des Intimbereichs wird z.B. eine kantenbasierte Segmentierung vorgenommen, um den Körper des Benutzers 27 im Bild zu detektieren. Anschließend erfolgt eine Mittelwertbildung der Graustufen der verbliebenen Bildpunkte, wobei die z.B. hellsten 20% bis 50% der Bildpunkte nicht berücksichtigt werden. Die hellsten Bildpunkte werden nicht berücksichtigt, um zu verhindern, dass der verschmutzte Bereich, der aufgrund der der höheren Reflektion der Verschmutzung hellere Bildpunkte aufweist, in den Mittelwert mit einfließt. Aus dem Mittelwert ergibt sich ein Grauwert, der in etwa dem tatsächlichen Grauwert der unverschmutzten Haut des Benutzers entspricht.

Dann wird ein adaptiver Schwellwert festgesetzt, der ein paar Graustufen heller als die nicht verschmutzte Haut ist. Unter Verwendung dieses adaptiven Schwellwerts wird das ursprüngliche Bild erneut segmentiert, indem alle Graustufenwerte, die dunkler als der Schwellwert sind auf 0 und die Grauwerte, die größer oder gleich dem Schwellwert sind, auf 1 gesetzt werden. Die Bildpunkte mit dem Wert 1 bilden ein oder mehrere Segmente. Diese Segmente entsprechen dem bzw. den verschmutzten Bereichen.

Aus diesem segmentierten Bild werden entsprechend dem oben erläuterten Verfahren die Steuerparameter (X', α) abgeleitet und der Duscharm zum Reinigen des Intimbereichs angesteuert.

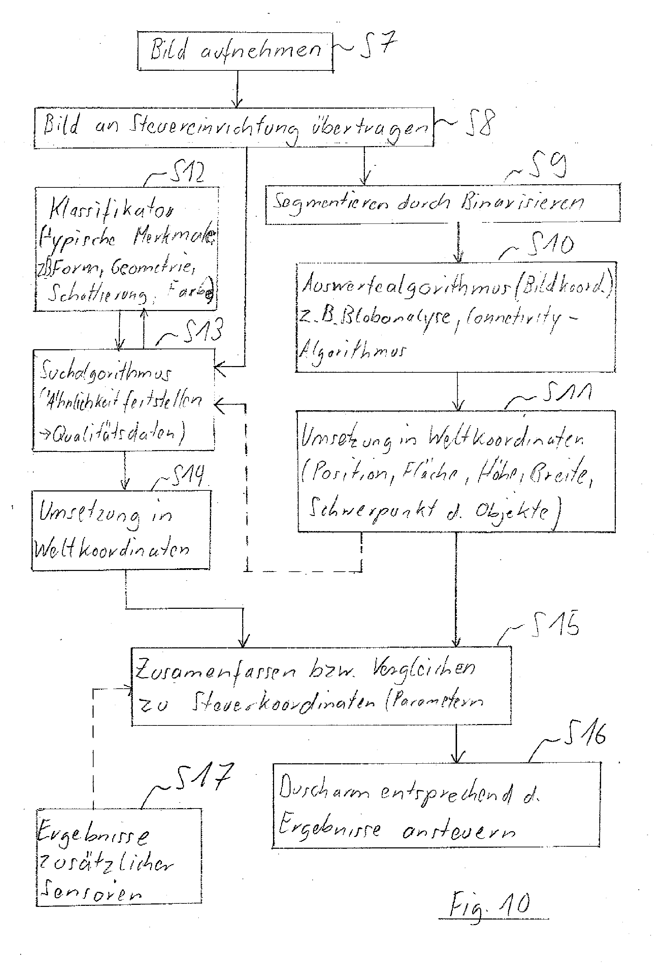

Gemäß einem weiteren Ausführungsbeispiel der Erfindung wird ein Verfahren zum Ermitteln der Steuerparamter und Ansteuern des Duscharmes vorgesehen (Figur 10), das präzisere Steuerparamter bereit stellt.

Mittels der Sensoreinrichtung wird ein Bild des verschmutzten Intimbereichs aufgenommen (Schritt S7).

Die Bilddaten werden an die Steuereinrichtung übertragen (Schritt S8).

Diese Bilddaten werden auf zweierlei Arten ausgewertet.

Die erste Auswertung erfolgt ähnlich wie in obigen Ausführungsbeispielen mit Segmentieren durch Binarisieren (Schritt S9), Extrahieren der relevanten Parameter des erfassten Bildes (Flächenschwerpunkt, Größe der Fläche) (Schritt S10) und Umsetzung in Weltkoordinaten (Schritt S11).

Das Extrahieren der relevanten Parameter kann bspw. mittels Blobanalyse oder einem Connectivity-Algorithmus erfolgen. Dies kann bspw. mittels der am Markt erhältlichen Software CVB Blob von der Firma STEMMER® IMAGING GmbH, Deutschland, ausgeführt werden.

Ein Suchalgorithmus ruft (Schritt S12) einen Klassifikator auf, der eine Datenbank von prototypischen Bilddaten zu reinigender Intimbereiche ist. Im Klassifikator sind die entsprechenden Bildobjekte zusammen mit charakteristischen Merkmalen (z.B. Form, Geometrie, Schattierung, Graustufen, Farbe, etc. der Intimbereiche und der Verschmutzungen) gespeichert. Am Markt ist die Software CVB Manto von der Firma STEMMER® IMAGING GmbH, Deutschland, erhältlich, die unter anderem geeignete Werkzeuge zum Erstellen eines solchen Klassifikators und einen entsprechenden Suchalgorithmus enthält. Der Klassifikator wird durch Einlesen mehrerer Bilder unterschiedlicher, verschmutzter Intimbereiche antrainiert.

Der Suchalgorithmus vergleicht (Schritt S13) das erfasste Bild mit den im Klassifikator vorhandenen Bildobjekten und erhält hierdurch die charakteristischen Merkmale der Verschmutzungen.

Aus den charakteristischen Merkmalen der Verschmutzungen werden die Weltkoordinaten abgeleitet (Schritt S14).

Die Weltkoordinaten der Verschmutzungen der beiden Auswertungen werden verglichen, ausgewertet und zusammengefasst, um die bestmöglichen Informationen über den Ort (die Position, die Fläche, die Höhe, Breite, Länge und der Schwerpunkt der Verschmutzung) der Verschmutzung zu erhalten Aus dieser Information werden die Steuerparameter abgeleitet (Schritt S15).

Im Schritt S16 wird die Reinigung nach Maßgabe der ermittelten Steuerparameter ausgeführt.

Beide Auswertungen sind grundsätzlich geeignet zur Bestimmung von Steuerparametern zum Ansteuern des Duscharmes. Sie können deshalb auch jeweils alleine zur Ansteuerung eines Duscharmes verwendet werden. Die erste Auswertung ist jedoch vorteilhaft, wenn große Verschmutzungen vorliegen, wohingegen die zweite Auswertung beim Reinigen kleinerer Verschmutzungen effizienter ist. Es ist deshalb auch zweckmäßig dieses Verfahren (Schritt S7 bis S16) wiederholt auszuführen, wobei jedes Mal ein neues Bild aufgenommen wird. Bei den ersten Durchläufen werden die Steuerparameter vor allem mit der ersten Auswertung und bei den zweiten Durchläufen mit der zweiten Auswertung erzeugt.

Das Verfahren nach Figur 10 wurde oben unter Verwendung einer einzigen Kamera erläutert. Zusätzlich können Bilder von mehreren Kameras, die an unterschiedlichen Positionen angeordnet sind entsprechend den Schritten S7 bis S15 unabhängig voneinander ausgewertet werden und deren Ergebnisse im Schritt S16 zusammengefasst werden.

Anstelle der oben in den unterschiedlichen Ausführungsbeispielen verwendeten Segmentierungsverfahren können andere Segmentierungsverfahren eingesetzt werden, wie z.B. eine pixelorientierte Segmentierung, eine kantenbasierte Segmentierung, ein regionenorientiertes Verfahren oder eine modellbasierte Segmentierung. Diese sind z.B. in digitale Bildverarbeitung, 6. überarbeitete und erweiterte Auflage, Bernd Jähne, Springer Verlag, ISBN 3-540-24999-0, 2005 im Kapitel 16 beschrieben.

Nachfolgend werden einige Abwandlungen der oben erläuterten Vorrichtung 1 zur Reinigung des Intimbereichs erläutert. Sofern nichts anderes angegeben ist weisen diese Abwandlungen die gleichen Merkmale wie die oben beschriebene Vorrichtung auf.

Um den verschmutzten Bereich noch genauer detektieren zu können kann auch ein Abstandssensor, z.B. in den Duscharm integriert sein, um die Höhe h des Benutzers über dem Duscharm exakt zu bestimmen.

Als Sensorelemente 20 können auch Kamerachips mit einem optischen-Sensor, wie z.B. Charged-Coupled-Device Sensor (CCD-Sensor), eine Infrarotkamera bzw. eine Wärmebildkamera, eine 3D-Kamera oder ein Ultraschallsensor, vorgesehen sein.

Als Infrarot-Kamera kann z.B. einer VarioCam® der InfraTec GmbH verwendet werden.

Bei Verwendung einer Wärmebildkamera kann als Schwellwert zur Segementierung des Bildes die tatsächlich Hauttemperatur verwendet werden. In diesem Fall kann ein Temperatursensor, insebesondere ein berührungslos arbeitender Infrarotsensor, zur Bestimmung der Hauttemperatur vorgesehen sein.

Der Duscharm kann auch als Roboterarm ausgebildet sein. Der Roboterarm weist bspw. zwei Schwenkgelenke auf, deren Schwenkachsen zueinander senkrecht ausgerichtet sind. Der Roboterarm ist um seine Längsachse drehbar ausgebildet. Das Ende des Roboterarms kann somit innerhalb der Toilettenschüssel an einer beliebigen Stelle angeordnet werden. Vorzugsweise ist der Roboterarm in der Toilettenschüssel ein- und ausfahrbar ausgebildet. Dadurch weist er drei Freiheitsgrade auf, wodurch eine dreidimensionale Bewegung im Raum möglich ist. Die Bewegung wird durch rotatorische und translatorische Bewegungen um die drei Raum-Achsen beschrieben. Somit ist jeder Raumpunkt im Detektions- bzw. Reinigungsbereich erreichbar. Die Sensoreinrichtung und/oder die Detektionseinrichtung sind am Roboterarm integriert. Der Intimbereich kann somit aus unterschiedlichen Richtungen detektiert werden und mit unterschiedlichen Winkeln mit einem Wasserstrahl bestrahlt werden.

Der Roboterarm ermöglicht es somit dem oder den Sensorelementen Bilder aus beliebigen Winkeln aufzunehmen. Zudem kann der Winkel der Reinigungseinrichtung gegenüber dem zu reinigenden Bereich beliebig verändert werden, um eine effektivere Reinigung zu ermöglichen.

Durch den Roboterarm kann die Vorrichtung auch näher und präziser an den zu detektierenden Bereich herangeführt werden oder beispielsweise für Aufnahmen während des Stuhlgangs derart angeordnet werden, dass die Sensorelemente nicht verschmutzt werden.

Der Roboterarm kann bei der Verwendung einer Bürste anstelle der Duscheinrichtung diese besonders genau und sanft bewegen.

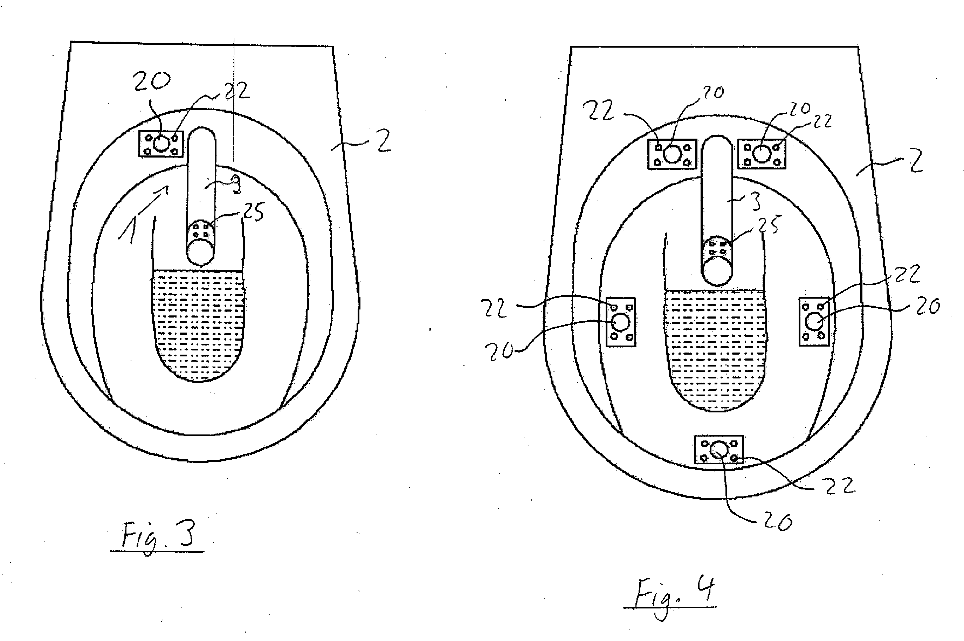

In einem weiteren Ausführungsbeispiel der vorliegenden Erfindung (Fig. 3) wird ein herkömmlicher Duscharm 3 verwendet. Zwei Sensoreinrichtungen 20 sind im Spülkragen 7 neben dem Duscharm 3 angeordnet. Beide Einrichtungen sind durch eine transparente Kunststoffabdeckung vor Verschmutzungen geschützt. Ein Abtastbereich der Sensoreinrichtungen erstreckt sich ausgehend vom Spülkragen kegelförmig, mit einem Öffnungswinkel von in etwa 30° bis 90°, und einem Winkel der optischen Achse gegenüber der Horizontalen von etwa 30° bis 45°.

Unterhalb der beiden im Spülkragen angeordneten Sensoreinrichtungen 20 ist im Spülkragen eine Anordnung von z.B. jeweils sechs LED's vorgesehen.

Mit einer Sensoreinrichtungen 20, die auf dem Spülarm angeordnet und in etwa senkrecht unter dem verschmutzten Bereich verfahrbar ist (gemäß dem ersten Ausführungsbeispiel), lässt sich der Bereich der Verschmutzung genauer als mit der im Spülkragen angeordneten Sensoreinrichtungen (gemäß dem zweiten Ausführungsbeispiel) detektieren, da der Abtastwinkel günstiger ist. Hierbei ist das Bild nicht durch die Perspektive verzerrt und es sind keine verschmutzten Bereiche durch den Körper des Benutzers verdeckt und der Abstand vom Sensor zur Verschmutzung wesentlich kleiner ist. Andererseits sind die am Spülkragen angeordneten Sensoreinrichtungen weniger stark einer Verschmutzungsgefahr ausgesetzt.

Bei der Detektion des verschmutzten Bereichs wird ebenfalls ein Bild erzeugt. Die optische Achse trifft jedoch unter einem bestimmten Winkel β und nicht wie im ersten Ausführungsbeisiel senkrecht auf die abzubildende Ebene. Der horizontale Abstand I von der Kamera zum Schnittpunkt der optischen Achse mit der abzubildenden Ebene ist bekannt. Die Höhe h des Benutzers bzgl. dem Niveau der Kamera ist ebenfalls bekannt. Über einen entsprechenden Abbildungsmaßstab und trigonometrische Funktionen lassen sich ebenfalls die Koordinaten des Flächenschwerpunkts der Verschmutzung berechnen.

Im Spülkragen angeordnete Sensoren können dazu verwendet werden, um festzustellen ob bzw. wann ein Benutzer auf der Toilette sitzt. Dies ermöglicht den automatischen Start des erfindungsgemäßen Verfahrens. Über z.B. eine Blobanalyse kann festgestellt werden wann die Benutzung beginnt. Anhand der Kamerabilder kann das ungefähre Volumen der ausgeschiedenen Masse bestimmt werden, was insbesondere bei älteren Menschen vorteilhaft sein kann.

Außerdem kann durch die räumliche Auflösung von zwei oder mehr Sensoren die Dicke der Verschmutzungsschicht und damit der Verschmutzungsgrad bestimmt werden.

Anhand von Informationen wie Größe und/oder Dicke der Verschmutzung wird der Druck und die Dauer des Wasserstrahls zum Reinigen eingestellt.

In einer weiteren Ausführungsform der vorliegenden Erfindung (Fig. 4) wird ebenfalls ein herkömmlicher Duscharm 3 verwendet.

Dabei ist vorgesehen die Sensoreinrichtung 20 und die Beleuchtungseinrichtung 22 links und rechts neben dem Duscharm und am Boden 8 des Toilettenbeckens 4 im Bereich links, rechts und vor einer mit Wasser gefüllten Ablauföffnung anzuordnen.

Bei diesem Ausführungsbeispiel kann als Sensoreinrichtung die Kamera VRm4FC-12 OEM/Cob der Firma VRmagic mit vier Sensoren verwendet werden. Bei dieser Kamera sind alle vier Sensoren mit einer einzigen Steuereinrichtung verbunden. Somit ist es möglich aus vier unterschiedlichen Richtungen jeweils ein Bild des zu detektierenden Bereichs zu erzeugen. Durch die verschiedenen Blickwinkel der Sensoren sind auch Bereiche, die z.B. bei Verwendung eines einzigen Sensors verdeckt sind, zu erkennen. Mittels Mittelwertbildung kann der Ort des verschmutzten Bereichs sehr genau detektiert werden. Insbesondere lässt sich mit dieser Ausführungsform die Position des verschmutzten Bereichs im Raum sehr gut bestimmen. Aus de mehreren Bildern kann auch die dreidimensionale Form der Verschmutzung erzeugt werden. Hieraus lässt sich ein Verschmutzungsgrad ableiten.

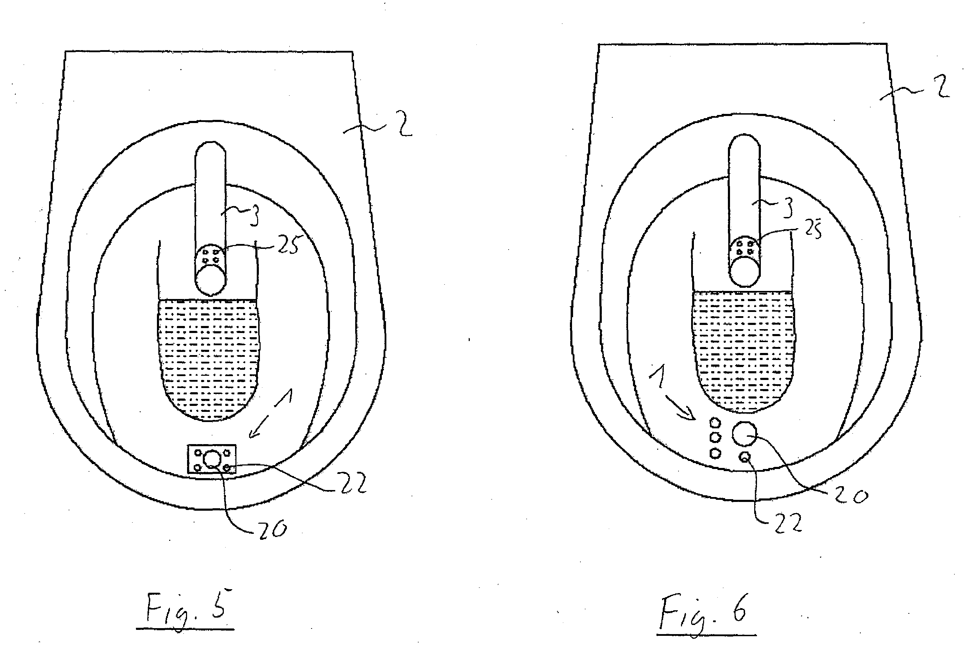

In einem weiteren Ausführungsbeispiel der vorliegenden Erfindung (Fig. 5) ist lediglich eine Beleuchtungseinrichtung 22 und eine Sensoreinrichtung 20 am Boden des Spülbeckens im Bereich vor der Ablauföffnung angeordnet. Die Sensoreinrichtung 20 ist als 3D-Sensor ausgebildet.

In einer weiteren Ausführungsbeispiel der vorliegenden Erfindung (Fig. 6) ist die Beleuchtungseinrichtung 22 und die Sensoreinrichtung 20 gemäß dem vorigen Ausführungsbeispiel angeordnet. Als Beleuchtungseinrichtung 22 ist ein Laser vorgesehen.

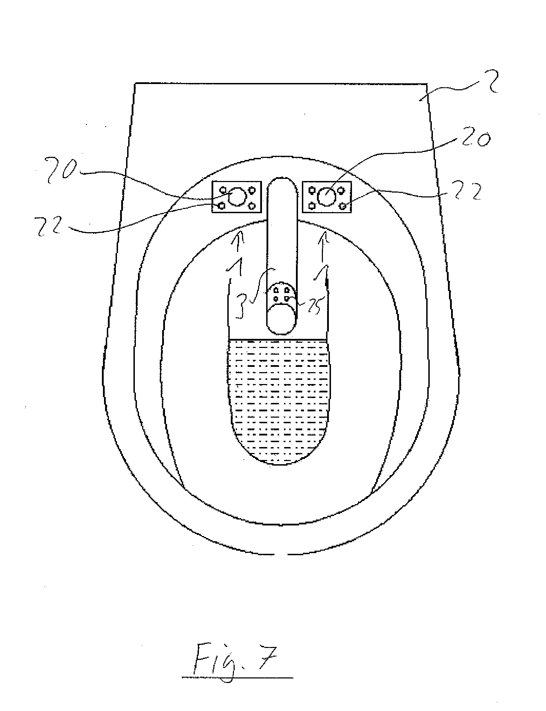

In einer weiteren Ausführungsform der vorliegenden Erfindung (Figur 7) sind die Sensoreinrichtung 20 und die Beleuchtungseinrichtung 22 links und rechts neben dem Duscharm 3 angeordnet.

Im folgenden wird zusammenfassend das allgemeine Verfahrensprinzip zur Reinigung des Intimbereichs anhand des in Figur 8 dargestellten Flussdiagramms erläutert.

Im ersten Schritt (Schritt S1) wird die Vorrichtung 1 durch ein Signal des Benutzers über die Steuereinheit aktiviert. Das Signal wird von der Steuereinheit an die Steuereinrichtung übertragen. Das Signal kann z.B. durch einen Akustiksensor oder einen Betätigungsknopf initiiert werden. Dieses Signal wird nach Beendigung des Stuhlgangs abgegeben.

Danach wird eine Bilderfassung (Schritt S2) ausgeführt. Die Steuereinrichtung gibt ein Signal an den Stellmotor des Duscharms 3, dass dieser ausgefahren wird. Anschließend wird über die Steuereinrichtung das Licht der Beleuchtungseinrichtung 22 eingeschaltet.

Mit den Sensorelementen 20 werden ein oder mehrere Bilder des zu detektierenden Bereichs erstellt. Die Auswerteeinrichtung analysiert das Bild bzw. die Bilder und detektiert den Bereich über eine Bildverarbeitung deren Funktionsweise weiter unten detailliert beschrieben wird. Hieraus werden die Koordinaten des intimen Bereichs gewonnen, anhand derer der Duscharm 3 eingestellt werden kann.

Nachdem der Bereich detektiert wurde, wird die Sensoreinrichtung und die Beleuchtungseinrichtung wieder abgeschaltet. Entsprechend der Koordinaten des detektierten Bereichs wird die Position des Duscharms in Längsrichtung und der Neigungswinkel um die Längsachse über den Stellmotor eingestellt.

Im dritten Schritt (Schritt S3) steuert die Steuereinrichtung die Wassereinrichtung an die daraufhin Wasser mit dem gewünschten Druck (evtl. an Verschmutzungszustand anpassen) und der gewünschten Temperatur bereitstellt. Wasser tritt aus den Düsen aus und reinigt den detektierten Bereich von den Verunreinigungen. Nach einer gewissen Zeit, z.B. von in etwa 10 bis 20 Sekunden wird der Reinigungsvorgang beendet und die Wasserzufuhr abgestellt. Während des Reinigungsvorganges kann der Wasserstrahl durch Drehen des Duscharmes geschwenkt oder durch Ein- und Ausfahren des Duscharms einer Translationsbewegung unterzogen werden.

Anschließend wird erneut ein Bilderfassung (Schritt S4) ausgeführt. Der zu reinigende Bereich wird erneut, wie bereits oben beschrieben detektiert und der Verschmutzungszustand überprüft. Daraufhin werden die Sensoreinrichtung 20 und die Beleuchtungseinrichtung 22 über die Steuereinrichtung abgeschaltet. Der Duscharm 3 fährt wieder in seine Ausgangsposition zurück. Während des Einfahrens wird der Duscharm auf die selbe Weise wie beim Ausfahren gereinigt.

Im fünften Schritt wird entschieden, ob der detektierte Verschmutzungszustand dem gewünschten Reinigungsergebnis entspricht oder nicht. Ist dies der Fall wird die Föhneinrichtung ausgefahren, um den zuvor gereinigten Bereich zu trocknen. Zusätzlich kann auch noch der Trocknungsgrad bestimmt werden um festzustellen, ob der Intimbereich vollständig trocken ist. Die Reinigung ist beendet (Schritt S6).

Die Föhneinrichtung föhnt in etwa 10 bis 20 Sekunden und wird anschließend eingefahren. Der Reinigungsvorgang ist nun beendet. Entspricht der Reinigungszustand nicht dem gewünschten Reinigungsergebnis wird erneut mit dem vierten Schritt S4 fortgefahren.

Der gesamte Reinigungsvorgang läuft somit vollautomatisch ab.

Während des Ausfahrens wird der Duscharm 3 gereinigt. Die Reinigung erfolgt dadurch, dass Wasser aus den Düsen austritt solange die Düsen zumindest teilweise noch von der Öffnung im Toilettenbeckenrand abgedeckt sind. Aufgrund des sehr geringen Spalts zwischen dem Duscharm 3 und den Öffnungen wird das Wasser unter Druck über die gesamte Mantelfläche 18 des Duscharms 3 verteilt und reinigt diesen vollflächig. Die Sensoreinrichtung 20 und die Beleuchtungseinrichtung 22 werden beim Ausfahren von der zweiten Dichtlippe abgezogen. Auf diese Weise wird sichergestellt, dass sich keine Tropfen oder Verunreinigungen auf den beiden Einrichtungen 20, 22 befinden, die deren Arbeitsweise beeinflussen würden.

Bei der Bilderfassung und Bildauswertung werden jeweils die Koordinaten des Intimbereiches als auch der Verschmutzungszustand ermittelt. Dies sind zwei voneinander unabhängige Zielgrößen.

Die Koordinaten des Intimbereiches können z.B. aus einem einzigen zweidimensionalen Bild mittels einer Merkmalsextraktion ermittelt werden. Da der Intimbereich meistens eine sehr ähnliche Form besitzt, enthält ein Bild, auf dem der Intimbereich dargestellt ist, immer eine ähnliche Struktur. Hiermit ist insbesondere die Helligkeitsstruktur gemeint, die an sich immer sehr ähnlich ist und sich von Benutzer zu Benutzer vor allem in der Größe und in der Position unterscheidet. Das Bild kann einer herkömmlichen Merkmalsextraktion unterzogen werden, um die gesuchten Strukturen automatisch zu finden und zu lokalisieren. Sind die Strukturen einmal festgestellt, so können die räumlichen Koordinaten die Intimbereiches dargestellt werden.

Zur Ermittlung der Koordinaten des Intimbereiches können jedoch auch aufwendigere Verfahren, insbesondere Verfahren zur 3D-Bildaufnahme verwendet werden. Derartige Verfahren beruhen auf unterschiedlichen Messprinzipien (Tiefe aus Triangulation, Tiefe aus Laufzeit, Tiefe aus Phase; Interferometrie, Gestaltausschattierung, Tiefe aus mehreren Projektionen). Derartige 3D-Bildaufnahmen sind in digitale Bildverarbeitung, 6. überarbeitete und erweiterte Auflage, Bernd Jähne, Springer Verlag, ISBN 3-540-24999-0, 2005 im Kapitel 8 beschrieben. Hierauf wird inhaltlich Bezug genommen. Aus einer solchen dreidimensionalen Kontur können die Koordinaten des Intimbereiches präziser gewonnen werden. Als 3D-Kamera kann z.B. eine SR 4000 der MESA Imaging AG, Schweiz, verwendet werden.

Zur Ermittlung des Verschmutzungszustandes können die Sensorelemente als Farbsensoren ausgebildet sein, so dass der Intimbereich in Farbe erfasst wird. Anhand der unterschiedlichen Farbschattierungen kann zum einen der Verschmutzungsbereich und zum anderen der Verschmutzungsgrad ermittelt werden. Der Verschmutzungsbereich bzw. der Verschmutzungsgrad werden somit anhand eines Kontrast- bzw. Farbabgleichs ermittelt. Die Beleuchtungseinrichtung und die Sensoreinrichtung sind insbesondere in diesem Fall bzgl. der abgestrahlten bzw. empfangenen Wellenlänge aufeinander abgestimmt.

Liegen bereits ältere Bilder des Intimbereiches des jeweiligen Benutzers vor, wie z.B. im Schritt S4, so können die neu detektierten Bilder mit den älteren Bildern verglichen werden. Es kann ein Differenzbild erstellt werden, woraus man zum einen den Reinigungserfolg einfach feststellen kann und zum anderen konkretere Anhaltspunkt über den Verschmutzungsgrad erhalten kann. Ein solches Differenzbild kann auch bei einer wiederholten Bildaufnahme nach den jeweiligen Reinigungsschritten erstellt werden.

Im Rahmen der Erfindung ist es auch unmöglich während des Reinigens Bilder zu Erfassen und so den Wasserstrahl in Echtzeit nachzuführen. Dies ist insbesondere mit dem Ausführungsbeispiel gemäß Figur 5 möglich, das mehrere Kameraeinheiten aufweist, so dass beim Verschmutzen einer oder mehrere Kameraeinheiten ein korrektes Bild von einer der anderen Kameraeinheit erfasst wird.

Die Vorrichtung 1 kann auch Verschmutzungen der Toilettenschüssel 2 detektieren und diese nach der Reinigung des Benutzers ebenfalls mittels des Duscharms und der darauf angeordneten Reinigungseinrichtung entfernen. Hierdurch steht dem Benutzer immer eine hygenisch einwandfreie, saubere Toilettenschüssel 2 zur Verfügung. Dieses Verfahren zum Reinigen der Toilettenschüssel kann auch unabhängig vom Verfahren zum Reinigen des Intimbereichs ausgeführt werden.

Es kann auch vorgesehen sein vor und nach dem Trocknen den Bereich zu detektieren, um festzustellen wann der Bereich trocken ist und der Trockenvorgang beendet werden kann.

Die Sensoren können auch derart ausgebildet sein, dass sie detektieren, ob sich eine Person auf der Toilette befindet. Sobald eine Person detektiert wird, wird der zu reinigende Ort detektiert. Auf diese Weise werden immer die aktuellen Positionskoordinaten ermittlet, die später durch Informationen über den Verschmutzungszustand ergänzt werden.

In einer weiteren Ausführungsform des erfindungsgemäßen Verfahrens wird die Vorrichtung auf die oben bereits beschriebene Weise aktiviert bevor der Benutzer mit dem Stuhlgang beginnt. Die Sensoreinrichtung detektiert den zu reinigenden Bereich, um für die Detektion des Verschmutzungszustandes ein Referenzbild zu haben und diesen genauer bestimmen zu können. Sobald der Duscharm wieder komplett eingefahren ist ertönt ein akustisches Signal, dass dem Benutzer signalisiert, dass dieser mit dem Stuhlgang beginnen kann.

Es kann auch vorgesehen sein, den Drucksensor und den Akustiksensor derart auszubilden, dass der Akustiksensor erst aktiviert wird wenn der Drucksensor ein Signal gibt. Auf diese Weise ist der Akustiksensor erst aktiv wenn sich auch wirklich jemand auf der Toilette befindet.

### Bezugszeichenliste

- 1: Vorrichtung
- 2: Toillettenschüssel
- 3: Duscharm
- 4: Toilettenbecken
- 5: Toilettenbeckenrand
- 6: Ovale Öffnung
- 7: Spülkragen
- 8: Boden
- 9: Rückwärtige Seite
- 10: Öffnung
- 11: Freies Ende
- 12: Hinteres Ende
- 13: Abschlusskappe
- 14: Duscharmkörper
- 15: Stirnseite
- 16: Mantelfläche
- 17: Erste Dichtlippe
- 18: Oberseite
- 19: Zweite Dichtlippe
- 20: Sensoreinrichtung
- 21: Signalleitung
- 22: Beleuchtungseinrichtung
- 23: Leitung
- 24: Abdeckung
- 25: Wasserdüsen
- 26: Wasserleitung
- 27: Benutzer
- 28: optische Achse
- 29: abzubildende Fläche
- 30: Flächenschwerpunkt der Verschmutzung

## Patentansprüche

1. Vorrichtung zur Reinigung des Intimbereichs eines auf einer Toilettenschüssel (2) sitzenden Benutzers umfassend
eine Reinigungseinrichtung zum Reinigen des Intimbereichs,
wobei die Vorrichtung eine Sensoreinrichtung (20) zur Detektion des Ortes und/oder des Verschmutzungszustandes aufweist,
**gekennzeichnet durch,**
eine Steuereinrichtung zum automatischen Ansteuern der Reinigungseinrichtung nach Maßgabe des detektierten Ortes bzw. des detektierten Verschmutzungszustandes.

2. Vorrichtung nach Anspruch 1,
**dadurch gekennzeichnet,**
**dass** die Vorrichtung in die Toilettenschüssel (2) integriert ist oder
**dass** die Vorrichtung ein Aufsatz für die Toilettenschüssel (2) ist.

3. Vorrichtung nach Anspruch 1 oder 2,
**dadurch gekennzeichnet,**
**dass** die Sensoreinrichtung (20) einen optischen Sensor, wie z.B. eine Kamera umfasst und eine Auswerteeinrichtung zum Durchführen einer Bildanalyse eines erfassten Bildes zur Ermittlung von Steuerparametern zum Ansteuern der Reinigungseinrichtung vorgesehen ist.

4. Vorrichtung nach Anspruch 3,
**dadurch gekennzeichnet,**
**dass** die Auswerteeinrichtung Mittel zur Segmentierung des verschmutzten Bereichs und Mittel um den Ort des verschmutzten Bereichs aus dem Segment zu extrahieren umfasst.

5. Vorrichtung nach einem der Ansprüche 1 bis 4,
**dadurch gekennzeichnet,**
**dass** die Reinigungseinrichtung einen beweglichen bzw. aus- und einfahrbaren Arm aufweist, der in die Toilettenschüssel integriert ist und eine Duscheinrichtung mit Düsen (25) für den Wasseraustritt ist vorgesehen ist, die in das vordere Ende eines Duscharms (3) integriert ist.

6. Vorrichtung nach Anspruch 4 oder 5,
**dadurch gekennzeichnet,**
**dass** in das vordere Ende des Arms die Sensorelemente (20) integriert sind.

7. Vorrichtung nach einem der Ansprüche 4 bis 6,
**dadurch gekennzeichnet,**
**dass** der optische Sensor in den Duscharm (3) integriert ist, wobei die optische Achse des optischen Sensors in etwa vertikal ausgerichtet ist.

8. Vorrichtung nach Anspruch 1 bis 6,
**dadurch gekennzeichnet,**
**dass** eine Beleuchtungseinrichtung (22) vorgesehen ist, die z.B. als Infrarot-Lichtquelle ausgebildet ist.

9. Vorrichtung zur Reinigung des Intimbereichs für eine Toilettenschüssel, insbesondere nach einem der Ansprüche 1 bis 8, umfassend,
eine Reinigungseinrichtung zum Reinigen des Intimbereichs,
eine Sensoreinrichtung (20) zur Detektion des Verschmutzungszustandes des Intimbereichs, die als Kamera zum Detektieren von Licht im sichtbaren Wellenlängebereich ausgebildet ist und im Infrarotbereich auch eine bestimmte Empfindlichkeit aufweist, und
eine Beleuchtungseinrichtung (22), die eine Infrarot-Lichtquelle ist.

10. Verfahren zur Reinigung des Intimbereichs eines auf einer Toilettenschüssel (2) sitzenden Benutzers bei dem ein Reinigungsvorgang mittels einer Reinigungseinrichtung ausgeführt wird,
wobei vor Beginn des Reinigungsvorgangs die Position des zu reinigenden Bereichs detektiert wird, um den Reinigungsvorgang zielgenau durchführen zu können
**dadurch gekennzeichnet,**
**dass** der Reinigungsvorgang vollautomatisch gesteuert und ausgeführt wird.

11. Verfahren nach Anspruch 10,
**dadurch gekennzeichnet,**
**dass** der Verschmutzungszustand des zu reinigenden Bereichs vor dem Reinigungsvorgang detektiert wird.

12. Verfahren nach Anspruch 10 oder 11,
**dadurch gekennzeichnet,**
**dass** nach Beendigung des Reinigungsvorgangs der Verschmutzungszustand des zu reinigenden Bereichs überprüft wird und gegebenenfalls ein weiterer Reinigungsvorgang initiiert wird.

13. Verfahren nach einem der Ansprüche 10 bis 12,
dass zur Überprüfung des Verschmutzungszustandes ein Klassifikator verwendet wird, der mit verschmutzten Intimbereichen angelernt wurde.

14. Verfahren nach einem der Ansprüche 10 bis 13,
dass zur Überprüfung des Verschmutzungszustandes ein Segmentierungsverfahren wie z.B. eine pixelorientierte Segmentierung, eine kantenbasierte Segmentierung, ein regionenorientiertes Verfahren oder eine modellbasierte Segmentierung verwendet wird.

15. Verfahren nach einem der Ansprüche 10 bis 14,
**dadurch gekennzeichnet,**
**dass** eine Vorrichtung nach einem der Ansprüche 1 bis 9 verwendet wird.
